# DEMANDE DE BREVET EUROPEEN

(11) **EP 1 703 148 A1**
(43) Date de publication de la demande: **20.09.2006**
(21) Numéro de dépôt: 06354009.0
(22) Date de dépôt: 08.03.2006
(51) Int. Cl.: F16B 45/02, A63B 29/02

(54) **Mousqueton à bague de verrouillage.**

(30) Priorité: 17.03.2005 FR 0502628
(71) Demandeur: ZEDEL, 38920 Crolles (FR)
(72) Inventeur: Petzl, Paul, 38530 Barraux (FR); Plaze, Pierre, 73000 Chambéry (FR)
(74) Mandataire: Hecké, Gérard

(57) **Abrégé**

Un mousqueton de sécurité comporte un doigt 12 pivotant à bague de verrouillage 14 coulissante coopérant avec un verrou 18. La bague 14 comporte un trou 22 de réception du verrou 18 en fin de course de translation vers la première position verrouillée pour constituer à la fois un dispositif mécanique de blocage de la bague 14, et un premier repère de visualisation signalant l'état verrouillé. Le verrou 18 est monté sur le doigt 12 mobile.

## Description

### Domaine technique de l'invention

L'invention est relative à un mousqueton comprenant un corps fixe en forme de C, ayant une première extrémité conformée en un élément de retenue, et une deuxième extrémité d'articulation d'un doigt mobile autour d'un axe de pivotement entre une position fermée et une position ouverte, ledit doigt comportant:
- un élément d'accrochage situé à l'opposé de l'axe de pivotement pour coopérer avec l'élément de retenue dans la position fermée,
- un ressort de rappel du doigt vers la position fermée,
- une bague de verrouillage montée coaxialement autour du doigt en ayant une longueur inférieure à celle du doigt, ladite bague étant déplaçable entre une première position verrouillée autorisant un blocage du doigt dans la position fermée, et une deuxième position déverrouillée permettant le déplacement du doigt vers la position ouverte,
- et un verrou susceptible de bloquer positivement la bague dans ladite première position verrouillée.

### Etat de la technique

Les mousquetons connus équipés de bagues de verrouillage du genre mentionné, utilisent généralement des bagues à vis ou à baïonnette. Dans le cas des bagues à vis, le passage de la deuxième position déverrouillée vers la première position verrouillée impose un vissage de plusieurs tours de la bague pour la déplacer en translation le long du doigt pendant une course de quelques millimètres de manière à recouvrir efficacement l'élément de retenue du corps. Cette opération de vissage est fastidieuse et nécessite un temps de manoeuvre relativement long. Le même inconvénient subsiste lors du dévissage pour le passage de la bague de la première position verrouillée vers la deuxième position déverrouillée. Dans le cas d'une bague à baïonnette, le blocage du doigt en position fermée s'opère par un premier déplacement en translation de la bague vers le haut à l'encontre de la force d'un ressort, suivi d'un deuxième déplacement en rotation limitée. Après relâchement, la bague est soumise à un léger mouvement de recul, et est maintenue dans la première position de blocage par la force élastique du ressort. Un déverrouillage intempestif de la bague reste néanmoins possible en présence de forces de friction exercées par la corde.

Le document EP 826890 décrit un mousqueton à bague de verrouillage, laquelle est montée à rotation autour du doigt pivotant. Un verrou à bille est solidaire du doigt, et coopère avec la bague rotative pour assurer le verrouillage positif du mousqueton en position fermée lorsque la bague est actionnée en fin de course. Le déplacement manuel en rotation de la bague de la première position verrouillée vers la deuxième position déverrouillée ne peut intervenir qu'après neutralisation préalable du verrou. L'ouverture du doigt d'un mousqueton verrouillé nécessite donc une première commande de déclenchement du verrou, un deuxième mouvement de rotation de la bague vers la deuxième position déverrouillée, et un troisième mouvement de pivotement du doigt vers la position d'ouverture. Le deuxième mouvement de rotation pour le déverrouillage de la bague rallonge la séquence d'ouverture, et complique la manipulation du mousqueton.

Le document EP 376860 décrit un mousqueton ayant un indicateur de position de la bague de verrouillage du doigt. Le dispositif ne possède pas de verrou assurant un verrouillage positif de la bague.

Le document US 5287645 se rapporte à un anneau à bague de verrouillage coulissante coopérant avec un pion téléscopique, lequel est solidaire du corps fixe. Le déblocage manuel du verrou doit s'effectuer au préalable pour pouvoir actionner la bague vers la position déverrouillée ou la position verrouillée. Une telle commande complique la manipulation pour la mise en place de l'anneau.

### Objet de l'invention

L'objet de l'invention consiste à réaliser un mousqueton de sécurité à verrouillage positif du doigt permettant d'améliorer la manipulation.

Le mousqueton selon l'invention est caractérisé en ce que le verrou est placé sur le doigt mobile, et la bague de verrouillage est montée à coulissement sur le doigt entre les première et deuxième positions, ladite bague comportant un trou de réception du verrou en fin de course de translation vers la première position verrouillée pour constituer à la fois un dispositif mécanique de blocage de la bague, et un premier repère de visualisation signalant l'état verrouillé.

Le déblocage manuel du verrou et l'actionnement en translation de la bague vers la position déverrouillée s'effectuent rapidement d'un seul geste du grimpeur.

Selon un mode de réalisation préférentiel, le verrou est placé sur l'une des faces latérales du doigt, en étant décalé angulairement de 90° par rapport à l'élément d'accrochage. Le verrou comporte un téton télescopique monté dans un orifice du doigt avec interposition d'un ressort de compression, le téton ayant une surface colorée pour constituer ledit premier repère de visualisation dans l'état verrouillé.

Au niveau de l'élément d'accrochage, la périphérie du doigt peut comporter un deuxième repère de visualisation visible dans l'état déverrouillé de la bague, et invisible dans l'état verrouillé.

La bague de verrouillage peut être réalisée en matériau métallique ou plastique.

### Description sommaire des dessins

D'autres avantages et caractéristiques de l'invention ressortiront plus clairement de la description qui va suivre, donnée uniquement à titre d'exemple non limitatif, et représentée aux dessins annexés dans lesquels:
- la figure 1 est une vue en perspective du mousqueton selon l'invention, le doigt étant fermé et verrouillé par la bague de verrouillage;
- la figure 2 est une vue de profil de la figure 1 ;
- la figure 3 montre une vue en élévation de la figure 1 ;
- la figure 4 est une vue en coupe selon la ligne 4-4 de la figure 3;
- la figure 5 est une vue en coupe selon la ligne 5-5 de la figure 3;
- la figure 6 représente une vue en coupe verticale du doigt dans la position fermée et verrouillée de la figure 1 ;
- la figure 7 montre une vue identique de la figure 3, le doigt étant fermé, et la bague étant déverrouillée;
- la figure 8 est une vue en coupe selon la ligne 8-8 de la figure 7;
- la figure 9 est une vue en coupe selon la ligne 9-9 de la figure 7;
- la figure 10 est une vue en coupe selon la ligne 10-10 de la figure 11;
- la figure 11 est une vue de profil de la figure 7;
- la figure 12 montre une vue identique de la figure 7, le doigt étant ouvert, et la bague étant déverrouillée;
- la figure 13 est une vue en coupe selon la ligne 13-13 de la figure 12.

### Description d'un mode préférentiel de l'invention

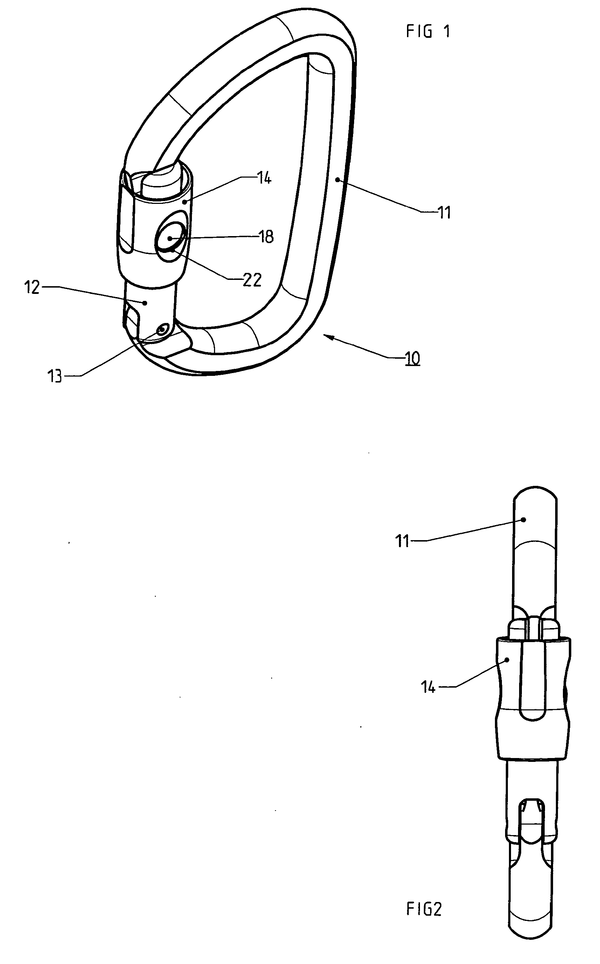

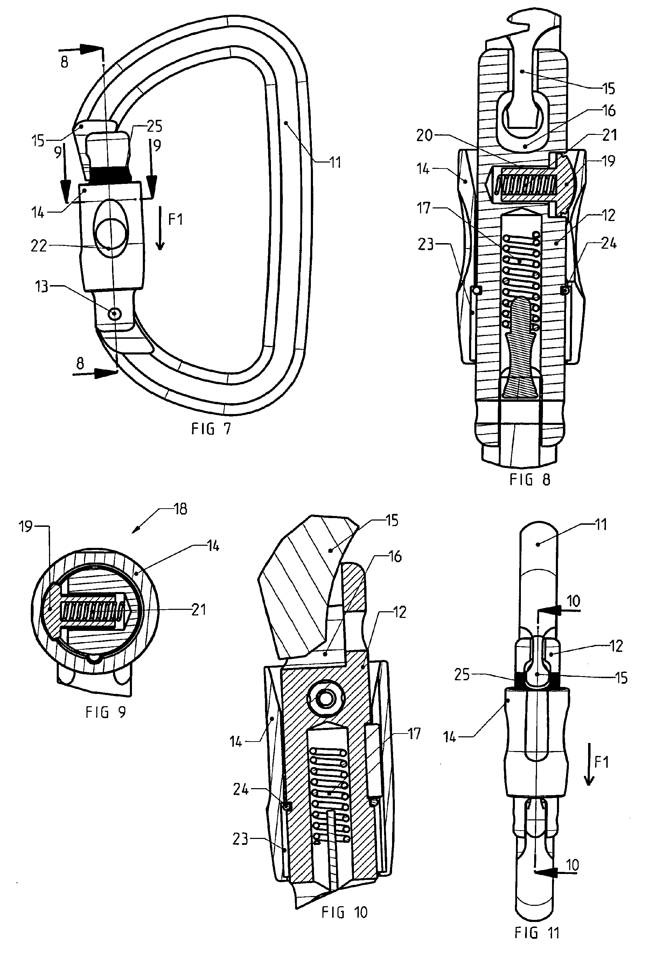

Sur les figures, un mousqueton 10 pour l'escalade et l'alpinisme comporte un corps 11 métallique en forme de C, et un doigt 12 mobile monté à pivotement sur un axe 13 situé à l'extrémité inférieure du corps 11. Le doigt 12 mobile est équipé d'une bague de verrouillage 14 coaxiale, montée à coulissement sur le doigt 12 entre une première position verrouillée (figures 1 à 6), et une deuxième position déverrouillée (figures 7 à 13).

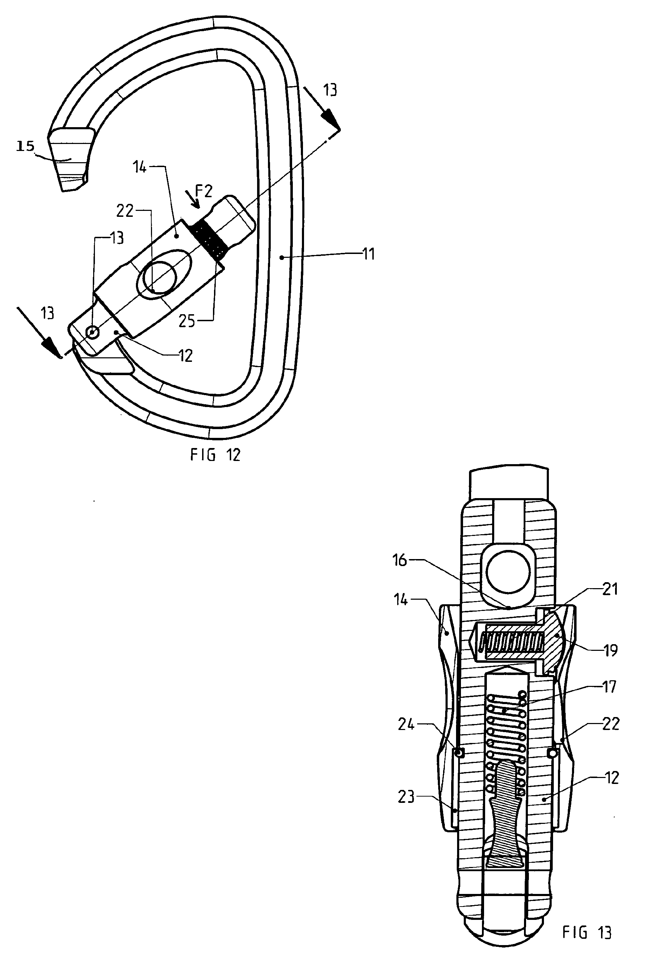

Dans la position déverrouillée de la bague 14, le doigt 12 est déplaçable vers l'intérieur du corps 11, autorisant l'ouverture du mousqueton (figure 12) pour permettre soit l'introduction d'une corde ou d'une sangle, soit l'accrochage du mousqueton à un organe d'amarrage (non représenté).

L'extrémité supérieure du corps 11 est pourvue d'un élément de retenue mâle 15 apte à s'engager dans un élément d'accrochage femelle 16 du doigt 12 lors de son retour vers la position de fermeture (figure 7) sous l'action d'un ressort de rappel 17. L'élément de retenue mâle 15 présente à titre d'exemple une structure de T renversé comportant une languette prolongée par une protubérance en forme de chape. L'élément d'accrochage femelle 16 du doigt 12 est situé à l'opposé de l'axe 13 de pivotement, et comprend un évidement de forme conjuguée à l'élément mâle 15. La bague de verrouillage 14 coulissante possède une longueur inférieure à celle du doigt 12.

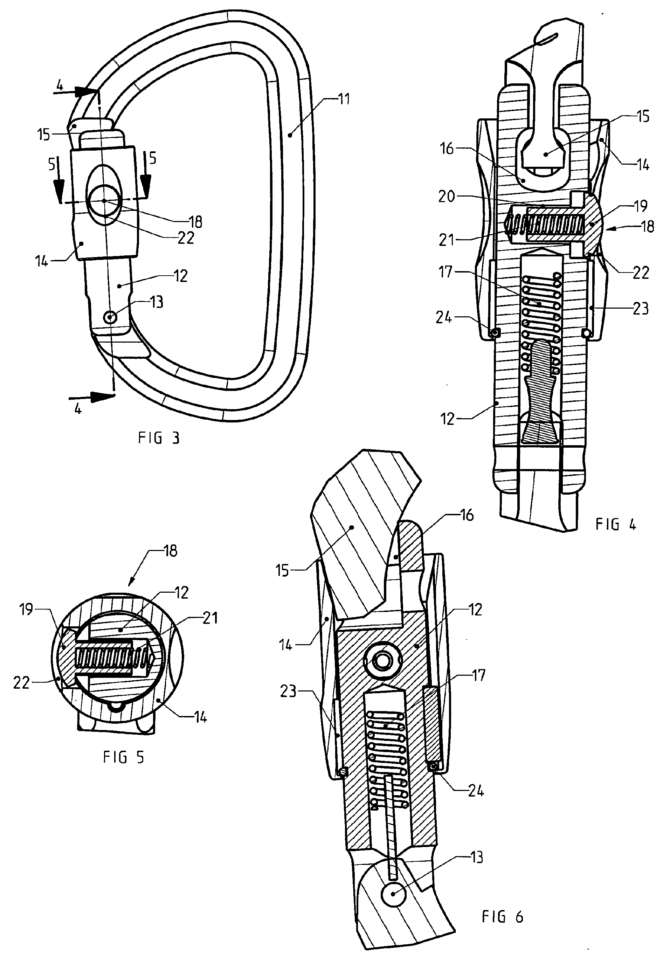

En position verrouillée, la partie supérieure de la bague 14 se trouve en regard de la protubérance de l'élément mâle 15 (figure 6), ce qui empêche tout pivotement du doigt 12 vers l'intérieur lors d'une action de poussée s'exerçant perpendiculairement par rapport à la direction longitudinale de la bague 14.

Lorsque la bague 14 est actionnée manuellement en translation vers le bas (flèche F1, figures 10 et 11) en direction de la position déverrouillée, la partie supérieure de la bague 14 libère la protubérance de l'élément mâle 15. L'ouverture du doigt 12 est alors possible par une action de poussée faisant pivoter le doigt 12 autour de l'axe 13 vers la position d'ouverture de la figure 12.

Le doigt 12 mobile est équipé en plus d'un verrou 18 susceptible de bloquer positivement la bague 14 dans la position verrouillée (figures 3 à 5). Le verrou 18 comporte un téton 19 télescopique logé dans un orifice 20 radial du doigt 12 avec interposition d'un ressort 21 de compression. La bague de verrouillage 14 est munie d'un trou 22 circulaire dans lequel s'engage le téton 19 lorsque la bague arrive dans la première position verrouillée. Dans cette position de verrouillage positif, l'actionnement en translation de la bague 14 vers la deuxième position déverrouillée est rendu impossible, et le doigt 12 reste fermé avec une sécurité totale, indépendamment de tout effort s'exerçant sur le doigt 12. Le trou 22 de passage du téton 19 est situé au fond d'une surface de préhension en forme de cuvette, ce qui facilite l'action d'enfoncement du verrou 18 pour le passage de la bague 14 vers la position déverrouillée. Le téton 19 du verrou 18 est avantageusement placé sur l'une des faces latérales du doigt 12, en étant décalé angulairement de 90° par rapport à l'élément d'accrochage femelle 16. Une telle disposition facilite le déverrouillage du verrou 18 et la commande de la bague 14.

La surface bombée du téton 19 est avantageusement colorée, par exemple en vert, de manière à constituer un premier repère de visualisation signalant l'état verrouillé de la bague 14 (figures 4 et 5). Dans l'autre état non verrouillé, ce premier repère n'est pas visible, car le téton 19 est caché par la bague 14 (figures 8 et 9).

Un deuxième repère de visualisation 25 peut être agencé autour de la périphérie du doigt 12 au niveau de l'élément d'accrochage femelle 16. Il est constitué par un revêtement coloré, par exemple en rouge, lequel est respectivement visible dans l'état déverrouillé de la bague 14, et invisible dans l'état verrouillé.

La course en translation de la bague 14 est limitée le long du doigt 12. Elle correspond à la longueur d'une rainure 23 annulaire ménagée à l'intérieur de la bague 14, et coopérant avec une butée 24 solidaire du doigt 12. La butée 24 peut être constitué par un circlips ou tout autre organe d'arrêt.

La bague de verrouillage 14 peut être réalisée en matériau métallique ou plastique.

### Le fonctionnement du mousqueton 10 selon les figures 1 à 13 est le suivant:

Dans la position fermée verrouillée du doigt 12 (figures 1 à 6), le verrou 18 est enclenché, et bloque positivement la bague de verrouillage 14 dans la première position verrouillée, laquelle est stable. La partie supérieure de la bague 14 est en butée contre l'élément de retenue mâle 15 fixe. Elle empêche tout mouvement de pivotement du doigt 12 vers l'intérieur du corps 11. Le ressort 21 maintient le téton 19 du verrou 18 dans le trou 22 de la bague 14, et le premier repère vert indique visuellement l'état verrouillé.

Les figures 7 à 11 illustrent la position fermée déverrouillée du doigt 12 suite au déplacement en translation (flèche F1, figure 11) de la bague 18 vers la position déverrouillée. Cette translation vers le bas de la bague 14 nécessite au préalable un déblocage manuel du verrou 18 lequel s'effectue par une action d'enfoncement du téton 19 à l'encontre de la force de rappel du ressort 21 de compression. En fin de course de déverrouillage de la bague 14, le téton 19 disparaît, laissant uniquement apparaître le trou 22 vide de la bague 14. Cette position de déverrouillage de la bague 14 est également stable, et est confirmée par l'apparition du deuxième repère 25 rouge.

En référence aux figures 12 et 13, il est maintenant possible de faire pivoter le doigt 12 (flèche F2) vers la position d'ouverture. La bague 14 reste immobilisée dans la position de déverrouillage, et le deuxième repère 25 rouge reste visible.

Après le relâchement de l'effort d'ouverture, le ressort de rappel 17 ramène automatiquement le doigt 12 mobile vers la position fermée déverrouillée (figure 7), et le verrou 18 n'est pas enclenché. Le passage vers la position fermée verrouillée (figures 3 à 6) nécessite ensuite un mouvement manuel en translation de la bague de verrouillage 14 vers le haut provoquant en fin de course, l'insertion du téton 19 dans le trou 22 de la bague 14.

## Revendications

1. Mousqueton comprenant un corps (11) fixe en forme de C, ayant une première extrémité conformée en un élément de retenue (15), et une deuxième extrémité d'articulation d'un doigt (12) mobile autour d'un axe de pivotement (13) entre une position fermée et une position ouverte, ledit doigt (12) comportant:
- un élément d'accrochage (16) situé à l'opposé de l'axe de pivotement (13) pour coopérer avec l'élément de retenue (15) dans la position fermée,
- un ressort (17) de rappel du doigt (12) vers la position fermée,
- une bague de verrouillage (14) montée coaxialement autour du doigt (12) en ayant une longueur inférieure à celle du doigt (12), ladite bague étant déplaçable entre une première position verrouillée autorisant un blocage du doigt dans la position fermée, et une deuxième position déverrouillée permettant le déplacement du doigt (12) vers la position ouverte,
- et un verrou (18) susceptible de bloquer positivement la bague (14) dans ladite première position verrouillée,
**caractérisé en ce que** le verrou (18) est placé sur le doigt (12) mobile, et **en ce que** la bague de verrouillage (14) est montée à coulissement sur le doigt (12) entre les première et deuxième positions, ladite bague comportant un trou (22) de réception du verrou (18) en fin de course de translation vers la première position verrouillée pour constituer à la fois un dispositif mécanique de blocage de la bague (14), et un premier repère de visualisation signalant l'état verrouillé.

2. Mousqueton selon la revendication 1, **caractérisé en ce que** le verrou (18) comporte un téton (19) téléscopique monté dans un orifice (20) du doigt (12) avec interposition d'un ressort (21) de compression, le téton ayant une surface colorée pour constituer ledit premier repère de visualisation dans l'état verrouillé.

3. Mousqueton selon la revendication 2, **caractérisé en ce que** la périphérie du doigt (12) au niveau de l'élément d'accrochage (16) comporte un deuxième repère de visualisation (25) visible dans l'état déverrouillé de la bague (14), et invisible dans l'état verrouillé.

4. Mousqueton selon la revendication 1, **caractérisé en ce que** le verrou (18) est placé sur l'une des faces latérales du doigt (12) mobile, en étant décalé angulairement par rapport à l'élément d'accrochage (16).

5. Mousqueton selon l'une des revendications 1 à 4, **caractérisé en ce que** la bague de verrouillage (14) est réalisée en matériau métallique.

6. Mousqueton selon l'une des revendications 1 à 4, **caractérisé en ce que** la bague de verrouillage (14) est réalisée en matériau plastique.
